## Europäisches Patentamt
## European Patent Office
## Office européen des brevets

(11) Veröffentlichungsnummer: **0 240 613**
**A2**

# (12) EUROPÄISCHE PATENTANMELDUNG

(21) Anmeldenummer: 86118151.9

(22) Anmeldetag: 30.12.86

(51) Int. Cl.4: **B62J 7/02**

(30) Priorität: 11.04.86 DE 3612308

(43) Veröffentlichungstag der Anmeldung:
14.10.87 Patentblatt 87/42

(84) Benannte Vertragsstaaten:
**AT BE CH DE ES FR GB IT LI LU NL SE**

(71) Anmelder: **KRAUSER Kraftfahrzeug-Zubehör Vertriebs-GmbH**
**Hörmannsbergerstrasse 18**
**D-8905 Mering(DE)**

(72) Erfinder: **Krauser, Michael**
**Hörmannsbergerstrasse 18**
**D-8905 Mering(DE)**

(74) Vertreter: **von Kirschbaum, Albrecht, Dipl.-Ing.**
**Hermann-Ehlers-Strasse 21a**
**D-8034 Germering(DE)**

(54) **Vorrichtung zur Befestigung eines Halterungsteils an einem tragenden Teil, wie einem Rahmen eines Motorrads u. dergl.**

(57) Bei einer Vorrichtung zur Befestigung eines Halterungsteils an einem tragenden Teil, wie einem Rahmen eines Motorrads u.dergl. sind Scheiben mit jeweils einem exzentrisch angeordneten, fest integrierten Schraubbolzen und einer mit Innengewinde versehenen Mittenbohrung verwendet. Diese Scheiben sind vorzugsweise in kreisförmigen oder ovalen Vertiefungen des Halterungsteils angeordnet. Dort können sie mittels gelockerter Schraubbolzen verdrehbar gehalten und dann in einer ermittelten Stellung durch Festziehen der Schraubbolzen in einer ermittelten Stellung fixiert werden. Hierbei sind an den Schraubbolzen der fixierten Scheiben vorzugsweise mit Langlöchern versehene Verbindungselemente befestigt.

Da die Scheiben um 360° drehbar in den Längsdurchbrüchen seitlich geführt verschiebbar sind. ist in Verbindung mit den in den Verbindungselementen vorgesehenen Langlöchern ein großer Variationsbereich geschaffen, so daß die Anzahl der für eine Anbringung von Halterungsteilen an dem unterschiedlichsten Motorradtypen benötigten Befestigungssätze erheblich reduziert ist..

## Vorrichtung zur Befestigung eines Halterungsteils an einem tragenden Teil, wie einem Rahmen eines Motorrads u.dergl.

Die Erfindung betrifft eine Vorrichtung zur Befestigung eines Halterungsteils an einem tragenden Teil, wie einem Rahmen eines Motorrads u.dergl., mittels dazwischen vorgesehener Verbindungselemente.

Um beispielsweise Gepäckstücke, insbesondere Motorradkoffer an einem Motorrad anbringen zu können, müssen an letzterem Halterungseinrichtungen, beispielsweise in Form von seitlichen Packtaschenhalterungen, von Z-oder S-förmigen einteiligen Halterungsteilen u.a.angebracht werden, in welche dann vorzugsweise Motorradkoffer mittels den jeweiligen Halterungseinrichtungen angepaßten Boden-oder Unterseiten eingeführt, eingehängt oder auf irgendeine andere Weise eingebracht und im allgemeinen mittels Schlössern gesichert sind.

Da diese Halterungsteile an möglichst vielen Motorrädern anbringbar sein sollen, müssen für die Vielzahl der in ihren Abmessungen und Ausmaßen oft stark voneinander abweichenden Motorradtypen immer ganz spezielle, auf den jeweiligen Motorradtyp genau abgestimmte Sätze von Beschlag-oder Verbindungsteilen angeboten werden, mittels welchen dann eine Verbindung zwischen der jeweiligen Halterungseinrichtung und dem Rahmen das entsprechenden Motorradtyps hergestellt wird. Selbst bei verhältnismäßig geringfügigen konstruktiven Änderungen müssen oft schon einzelne Teile eines solchen Beschlagteilsatzes ausgewechselt und durch neue,den geänderten Abmessungen angepaßte Teile ersetzt werden. Es müssen somit von den Herstellern solcher Verbindungs-und Befestigungsteile eine große Anzahl solcher Beschlagsätze geliefert werden; genauso müssen die Händler praktisch für jeden des von ihnen angebotenen Motorradtyps, an wlechem eine bestimmte Halterungseinrichtung angebracht werden kann, die entsprechenden Beschlagsätze vorrätig haben.

Aufgabe der Erfindung ist es daher, eine Vorrichtung zur Befestigung eines Halterungsteils an einem tragenden Teil, wie einem Rahmen eines Motorrads u.ä., mittels dazwischen vorgesehener Verbindungsteile zu schaffen, welche so ausgebildet ist, daß die Vorrichtung in einem möglichst großen Bereich variierbar bzw. variabel ist, so daß die erfindungsgemäße Vorrichtung bei möglichst vielen Motorradtypen verwendbar und einsetzbar ist. Gemäß der Erfindung ist dies bei einer Vorrichtung zur Befestigung eines Halterungsteils an einem tragenden Teil, wie an einem Rahmen eines Motorrads u.dergl. durch die Merkmale im kennzeichnenden Teil des Anspruchs 1 erreicht. Eine bevorzugte Weiterbildung ist Gegenstand des Unteranspruchs.

Gemäß einer bevorzugten Ausführungsform sind Scheiben mit jeweils einem exzentrisch angeordneten und fest integrierten, d.h. starr mit den Scheiben verbundenen Schraubbolzen und einer mit Innengewinde versehenen Bohrung geschaffen. Diese Scheiben können mittels gelockerter Schraubbolzen über in den Halterungseinrichtungen vorgesehene Bohrungen verdrehbar gehaltert und dann in der ermittelten Stellung durch Festziehen der Schraubbolzen fixiert werden. Hierbei sind an den Schraubbolzen der fixierten Scheiben die vorzugsweise mindestens an einem Ende mit einem Langloch versehenen Verbindungselemente befestigt.

Gemäß einer bevorzugten Ausführungsform können bei entsprechend breit und tief ausgebildeten Schenkeln oder Rahmenteilen der Halterungseinrichtungen die Scheiben in diesen Hal terungsteilen in runden oder ovalen Vertiefungen mit einem zentralen Durchbruch bzw. mit Längsdurchbrüchen verdrehbar und gegebenenfalls verschiebbar untergebracht sein und dann in der ermittelten Lage mittels der Schraubbolzen fixiert werden. Hierbei sind die Schraubbolzen, mittels welchen die verdrehbaren Scheiben fixiert sind, von der der Vertiefung abgewandten Seite der Halterungseinrichtung eingebracht.

Die auf der Innenseite einer Halterungseinrichtung angebrachten bzw. vorzugsweise in ein entsprechend breites Halterungsteil eingelassenen Scheiben mit dem jeweils exzentrisch angeordneten,mit der Scheibe starr verbundenen Bolzen können um 360° gedreht werden und bei entsprechender Ausbildung noch zusätzlich in einem Langloch geführt verschoben werden.

Vorzugsweise sind drei solcher Scheiben an einer Halterungseinrichtung bzw. in diese eingelassen vorgesehen, so daß dadurch eine Halterungseinrichtung oder ein Halterungteil über drei Stellen mit dem Rahmen eines Motorrads verbunden und an diesem befestigt ist. Dadurch wird der Anbau nicht nur einfacher und ist schneller vorzunehmen, sondern aufgrund der Verdrehbarkeit und gegebenenfalls der Verschiebbarkeit der Scheiben in Bohrungen bzw. Langlöchern in Verbindung mit den mindestens an einem Ende der Verbindungs-oder Beschlagteile ausgebildeten Langlöcher ist ein großer Variationsbereich gegeben, so daß bei einer großen Anzahl Motorradtypen zumindest eines Herstellers der gleiche Satz Beschlagteile verwendet werden kann.

Aufgrund der über drei Stellen erfolgten Befestigung am Motorrad ist der Träger mit diesem so fest verbunden, daß die herkömmliche, zwischen den Halterungseinrichtungen oder -teilen bisher erforderliche Querverbindung ganz entfallen kann. Insbesondere durch die Verwendung der erfindungsgemäßen Scheiben mit jeweils einen exzentrisch angeordneten Schraubbolzen gibt es viel weniger Probleme bezüglich der Anbauteile und der dafür beispielsweise am Rahmen eines Motorrads erforderlichen Befestigungspunkte, so daß die erfindungsgemäße Befestigungsvorrichtung unabhängig von der jeweiligen Motorradmarke und deren Baujahr und auch unabhängig von dem jeweils verwendeten Federungssysteme verwendet und angebracht werden kann.

Nachfolgend wird die Erfindung anhand einer bevorzugten Ausführungsform unter Bezugnahme auf die anliegende Zeichnungen im einzelnen erläutert. Es zeigen:

Fig.1 schematische eine perspektivische Ansicht des hinteren Teils eines Motorrads mit einem an diesem befestigten Halterungsteil;

Fig.2 schematisch eine perspektivische Darstellung der Vorderseite eines Halterungsteils mit ihm zugeordneten Verbindungs-, Beschlag-und Befestigungsteilen;

Fig.3 eine der Fig.2 entsprechende Darstellung der Rückseite des Halterungsteils, und

Fig.4 schematisch eine perspektivische Darstellung einer bevorzugten Ausführungsform eines Befestigungsteils gemäß der Erfindung.

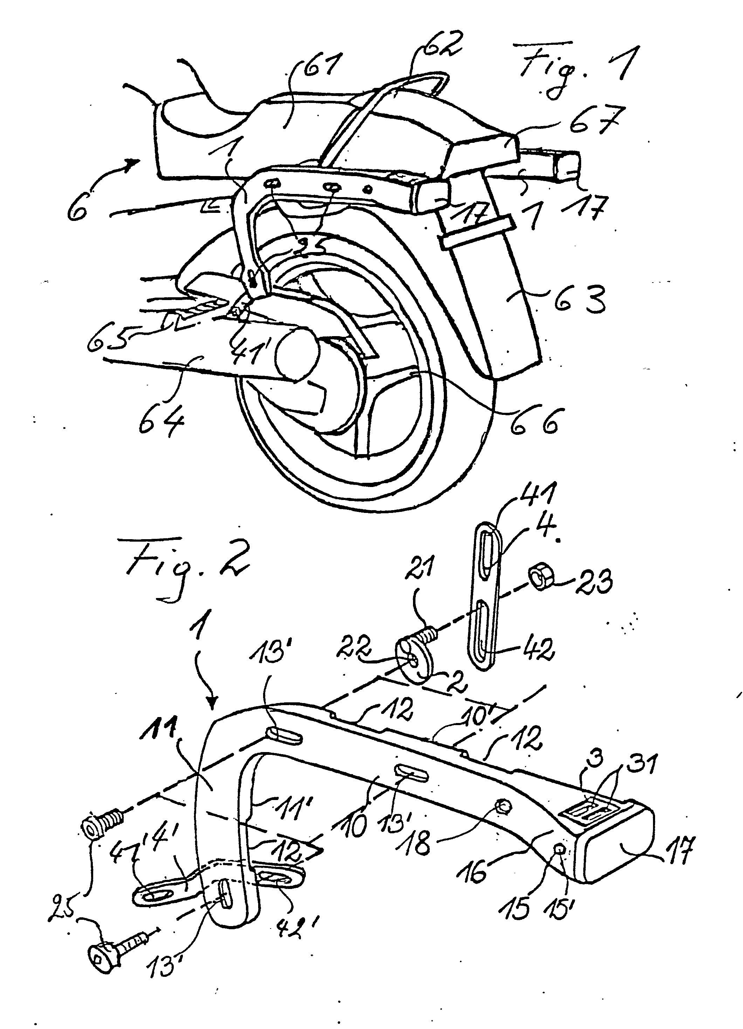

In Fig.1 ist schematisch der hintere Teil eines Motorrads 6 dargestellt, an welchem eine Sitzbank 61, ein Haltebügel 62, ein Schutzblech 63, ein Auspuff 64, eine Fußraste 65 für den Sozius, ein Hinterrad 66 sowie ein Rück-und Bremslicht 67, sowie weitere nicht näher bezeichnete und hier angeführte Teile zu erkennen sind.

Etwa in Höhe des unteren Randes der Sitzbank 1 sind mittels in Fig.1 nicht näher erkennbarer Beschlag-und Befestigungs teile Halterungsteile in Form von bumerangförmigen Tragelementen 1 am nicht näher bezeichneten Rahmen des Motorrads 6 befestigt. Das untere freie Ende jedes Tragelements 1 ist über ein schematisch angedeutetes Beschlagteil 41' an der Fußraste bzw. im Bereich der Fußraste 65 befestigt.

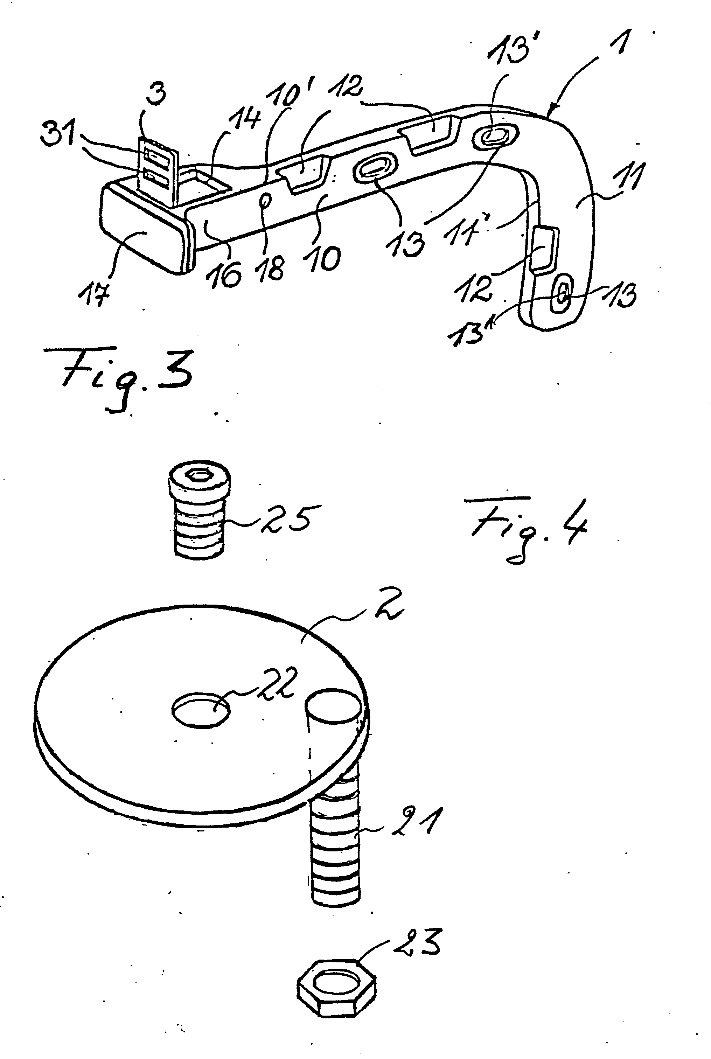

In Fig.2 ist das bumerangförmige Tragelement 1 vergrößert perspektivisch wiedergegeben. Das einteilige Tragelement 1 weist einen langen Schenkel 10 und einen kurzen Schenkel 11 auf, die zueinander unter einem Winkel von weniger als 90° angeordnet sind. Das freie (in Fahrtrichtung gesehen) hintere Ende des langen Schenkels ist in Draufsicht breiter ausgebildet; in der Verbreiterung 16 ist ein nicht näher dargestelltes Blinkergehäuse mit Reflektor untergebracht, welches am hinteren Ende in eine Blinkerabdeckung 17 (siehe auch Fig.1) übergeht.

An der Oberseite der Verbreiterung des langen Schenkels ist ein etwa rechteckiger Ausschnitt 14 (Fig.3) für eine Halterungszunge 3 mit zwei Durchbrüchen 31 ausgebildet, welche, wie aus Fig.3 zu ersehen, in eine etwa vertikale Stellung verschwenkbar ist.

Im vorderen und mittleren Bereich des langen Schenkels 10 sowie im unteren freien Ende des kurzen Schenkels 11 sind insgesamt vorzugsweise drei Längsschlitze 13' ausgebildet. Diese Längsschlitze 13' liegen, wie aus Fig.3 zu ersehen ist, mittig in drei vorzugsweise ovalen Vertiefungen 13. Ferner sind auf der Innenseite des längeren Schenkels 10 zwei im Querschnitt etwa trapezförmige Ausnehmungen 12 und im kürzeren Schenkel 11 an dessen rückseitiger, innenliegender Kante 11' eine weitere, im Querschnitt ebenfalls etwa trapezförmige Ausnehmung 12 ausgebildet.

In diese Ausnehmungen 12 ist ein auf seiner Unter-bzw. Bodenseite mit entsprechenden Ansätzen versehener, hier nicht näher dargestellter Koffer einführbar, der dann in dieser Lage dadurch gesichert ist, daß in einer der Ausschnitte 31 der in die vertikale Stellung verschwenkten Halterungszunge 3 ein Schloß einrastet.

In Fig.2 ist ferner schematisch eine Scheibe 2 dargestellt, welche in Fig.4 gesondert in einer - schematischen, perspektivischen Darstellung wiedergegeben ist. Die kreisförmige Scheibe 2 weist eine Mittenbohrung 22 mit Innengewinde auf. Ferner steht von der Scheibe 2 ein exzentrisch und senkrecht zu der Scheibenoberfläche angeordneter Schraubbolzen 21 vor, welcher in die Scheibe 2 integriert ist bzw. mit dieser starr verbunden ist. In Verlängerung des Schraubbolzens ist in Fig.2 und 4 jeweils eine Sechskant-Schraubmutter 23 wiedergegeben. Ferner sind in Fig.2 und 4 jeweils noch ein Schraubbolzen 25 mit einem nicht näher bezeichneten und nur schematisch angedeuten Sechskantimbus dargestellt.

Ferner sind in Fig.2 schematisch unterschiedlich ausgeführte Beschlagteile 4 und 4' dargestellt. Sowohl das Beschlagteil 4 als auch das abgewinkelte Beschlagteil 4' weisen an beiden Enden Langlöcher 41, 42 bzw. 41', 42' auf.

Zur Vorbereitung der Anbringung eines bumerangförmigen Tragelements 1 am hinteren Teil des Motorrads 6 werden zuerst in jede der drei vorzugsweise ovalen Vertiefungen 13 die Scheiben 2 eingelegt und mittels der Schraubbolzen 25 locker in den Vertiefungen 13 gehaltert, so daß sie (2) sowohl verdrehbar als auch in den Durchbrüchen

13' seitlich geführt verschiebbar sind. Hierauf werden die verschiedenen Beschlagteile, wie beispielsweise 4 und 4' mittels Schraubmuttern 23 auf den Schraubbolzen 21 der Scheiben 2 lose gehalten, so daß sie bezüglich dieser Schraubbolzen 21 drehbar und im Bereich ihrer mindestens an einem Ende ausgebildeten Langlöcher 42 bzw. 42' verschiebbar sind.

Die anderen Enden der Beschlagteile, wie beispielsweise 4 und 4', werden dann mittels nicht näher dargestellter Schraubbolzen in am Motorradrahmen vorgesehene Bohrungen mit Innengewinde bzw. beispielsweise an im Bereich der Fußraste 65 vorgesehene Ansätze mit Innengewinde geschraubt. Im Bereich der Fußrastse 65 kann hierzu beispielsweise die Befestigungsschraube sowie der mit Innengewinde versehene Ansatz benutzt werden, welcher zur Halterung und Befestigung des Auspuffs 64 vorgesehen ist.

Das Tragelement 1 wird dann in die in Fig.1 dargestellte Lage gebracht, indem die Befestigungsscheiben 2 in den Vertiefungen 13 gegebenenfalls seitlich verschoben und so verdreht werden, daß die an den Schraubbolzen 21 gehalterten Beschlagteile 4 bzw. 4' bezüglich des Motorradrahmens entsprechend ausgerichtet sind. Sobald das Tragelement 1 provisorisch in die gewünschte Lage gebracht ist, werden nacheinander die einzelnen Muttern 23 sowie die Schraubbolzen 25 zur Fixierung der Scheiben 2 angezogen. Um ein Lösen sowohl der Schraubmuttern 23 als auch der Schraubbolzen 25 zu unterbinden, sind zwischen ihnen und den Beschlagteilen, beispielsweise 4 und 4' bzw. den Durchbrüchen 13' im Tragelement 1 vorzugsweise nicht näher dargestellte Wellscheiben vorgesehen.

Um die Übersichtlichkeit der Darstellung in Fig.2 nicht zu beeinträchtigen, sind nur zwei Befestigungsschrauben 25, die zwei Beschlagteile 4 und 4' sowie nur jeweils eine Befestigungsscheibe 2 und eine auf deren Schraubbolzen 21 aufzubringende Schraubmutter 23 dargestellt. Das Einführen bzw. die Zuordnung der einzelnen Teile ist in Fig.2 schematisch durch gestrichelte Linien angedeutet. Aufgrund der Ausbildung der Scheibe 2 mit dem exzentrisch und senkrecht zur Scheibenoberfläche angeordneten Schraubbolzen 21 sowie der Längsschlitze 13' bzw. der Langlöcher 41, 41', 42 und 42' in den einzelnen Beschlagteilen 4 bzw. 4' ist eine große Variationsbreite erreicht.

Dies hat in der Praxis den Vorteil, daß mit einer geringen Anzahl von Beschlagteilen, wie beispielsweise 4 bzw. 4' in Verbindung mit den verdrehbaren und vorzugsweise in Längsschlitzen 13' längsverschiebbaren Scheiben 2 das Tragelement 1 oder ein anderes entsprechendes Halterungsteil an praktisch allen derzeit verfügbaren Motorradtypen befestigt werden kann.

Wenn beispielsweise die Längsschlitze 13' in dem Tragelement 1 sowie die Langlöcher 41 bis 42' in den Beschlagteilen 4 und 4' jeweils 20 bis 25mm lang sind, und wenn ferner der Durchmesser der Befestigungsscheiben 40 bis 45mm beträgt, ist bei dieser Dimensionierung eine Variationsbreite von bis zu etwa 100mm rings um die in den beiden Schenkeln 11 und 12 des Tragelements vorgesehenen Durchbrüche 13' gegeben.

## Ansprüche

1. Vorrichtung zur Befestigung eines Halterungsteils an einem tragenden Teil, wie einem Rahmen eines Motorrads u.dergl. mittels dazwischen vorgesehener Verbindungselemente, dadurch **gekennzeichnet**, daß Scheiben (2) mit jeweils einem exzentrisch angeordneten, fest integrierten Schraubbolzen (21) und einer mit Innengewinde versehenen Mittenbohrung (22) mittels gelockerter Schraubbolzen (25), die durch im Halterungsteil (1) ausgebildete Bohrungen oder Langlöcher (13') eingebracht sind, verdrehbar gehaltert und dann mittels der festgezogenen Schraubbolzen (25) in einer ermittelten Stellung fixierbar sind, wobei an den Schraubbolzen (21) der fixierten Scheiben (2) die vorzugsweise mindestens an einem Ende mit einem Langloch (41, 42; 41', 42') versehenen Verbindungselemente (4; 4') befestigt sind.

2. Vorrichtung nach Anspruch 1, dadurch **gekennzeichnet**, daß die Scheiben (2) im Halterungsteil (1) in kreisförmigen oder ovalen Vertiefungen (13) mit jeweils zentralen Durchbrüchen bzw. mit Längsdurchbrüchen (13') verdrehbar und verschiebbar untergebracht sind und in der ermittelten Lage mittels der Schraubbolzen (25) fixierbar sind, welche von der der Vertiefung (13) abgewandten Seite des Halterungsteils (1) eingebracht sind.

Fig. 1

Fig. 2

0 240 613

Fig.3

Fig.4